# EUROPEAN PATENT APPLICATION

(11) **EP 4 491 495 A1**
(43) Date of publication of application: **15.01.2025**
(21) Application number: 24187035.1
(22) Date of filing: 08.07.2024
(51) Int. Cl.: B62D 29/04, B29B 11/14, B29C 45/14

(54) **INNOVATIVE COMPONENT FOR A MOTOR VEHICLE AND MANUFACTURING METHOD THEREOF**

(30) Priority: 11.07.2023 IT 202300014457
(71) Applicant: FERRARI S.p.A., 41100 Modena (IT)
(72) Inventor: ABECASSIS, Stephanie Nicole, 41100 MODENA (IT); MORUZZI, Patrizio, 41100 MODENA (IT); CAVALLARO, Silvia, 41100 MODENA (IT)
(74) Representative: Studio Torta S.p.A.

(57) **Abstract**

A component (1) for a motor vehicle (10) is described provided with a support layer (2) adapted to be fixed to a portion of the motor vehicle (10) and a layer (3) made of a sand composition (3) and adhering and/or contiguous to the support layer (2).

## Description

### CROSS-REFERENCE TO RELATED APPLICATIONS

This patent application claims priority from Italian patent application no. 102023000014457 filed on July 11, 2023, the entire disclosure of which is incorporated herein by reference.

### TECHNICAL FIELD

The invention concerns a component for a motor vehicle and a motor vehicle comprising said component. The invention also concerns a manufacturing method of said component.

### BACKGROUND

In the current automotive market, increasing attention is paid to the theme of sustainability. More specifically, in order to reduce the environmental impact (which can be measured, for example, by means of the carbon footprint parameter) associated with the production and use of motor vehicles, it is necessary to evaluate the greenhouse gas emissions correlated with each vehicle component.

The applicant has observed, specifically, that some components of the known motor vehicles comprise materials of fossil origin and are constructed using processes that are not environment-friendly (in terms of energy and water consumption).

In the light of the above, the need is felt to reduce the environmental impact of the vehicle components.

One object of the invention is to respond to the above need, preferably in a simple reliable manner.

### DISCLOSURE OF THE INVENTION

The object is achieved by a component for a motor vehicle as defined in claims 1 and 2, a manufacturing method of a component for a motor vehicle as defined in claim 13 and a sand composition as defined in claim 18. The dependent claims define particular embodiments of the invention.

### BRIEF DESCRIPTION OF THE DRAWINGS

Below, two embodiments of the invention are described for a better understanding thereof by way of non-limiting example and with reference to the attached drawings in which:
- figure 1 is a perspective view of a cabin of a motor vehicle comprising a component according to a first embodiment of the present invention;
- figure 2 is a perspective view of the motor vehicle component illustrated in figure 1;
- figure 3 is a section view of the component illustrated in figures 1 and 2 with parts removed for clarity; and
- figure 4 is a section view of a motor vehicle component according to a second embodiment of the present invention and with parts removed for clarity.

### EMBODIMENTS OF THE INVENTION

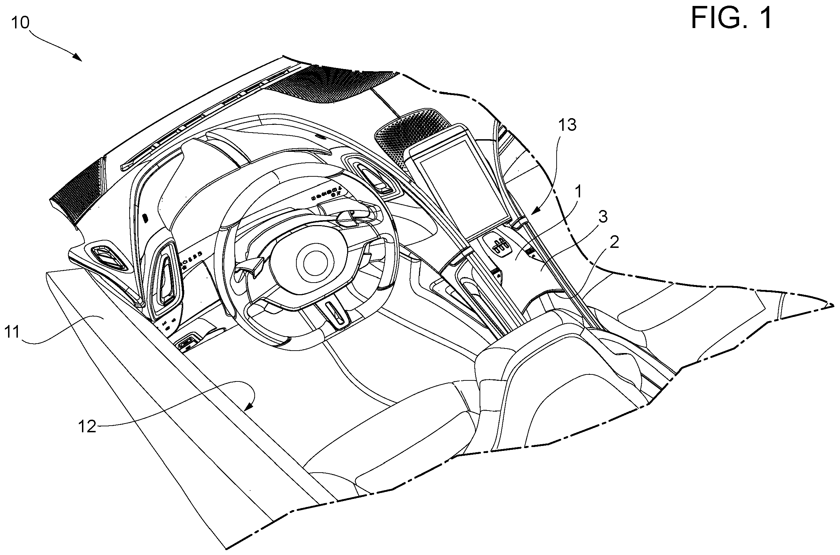

In figure 1, the reference number 10 is used to indicate, overall, a motor vehicle comprising:
- a frame 11,
- a plurality of wheels - not illustrated - rotatable with respect to the frame 11 around respective rotation axes;
- a cabin 12 to accommodate at least one driver and possibly one or more passengers, which is fixed relative to the frame 11; and
- a component 1 arranged at the cabin 12 (only partially illustrated in figure 1).

In the non-limiting embodiment illustrated, the component 1 is an internal finish component of the cabin 12. More specifically, the component 1 is a covering or casing of a portion of a tunnel console 13 of the cabin 12. In detail, the component 1 forms part of a control panel of the motor vehicle 1.

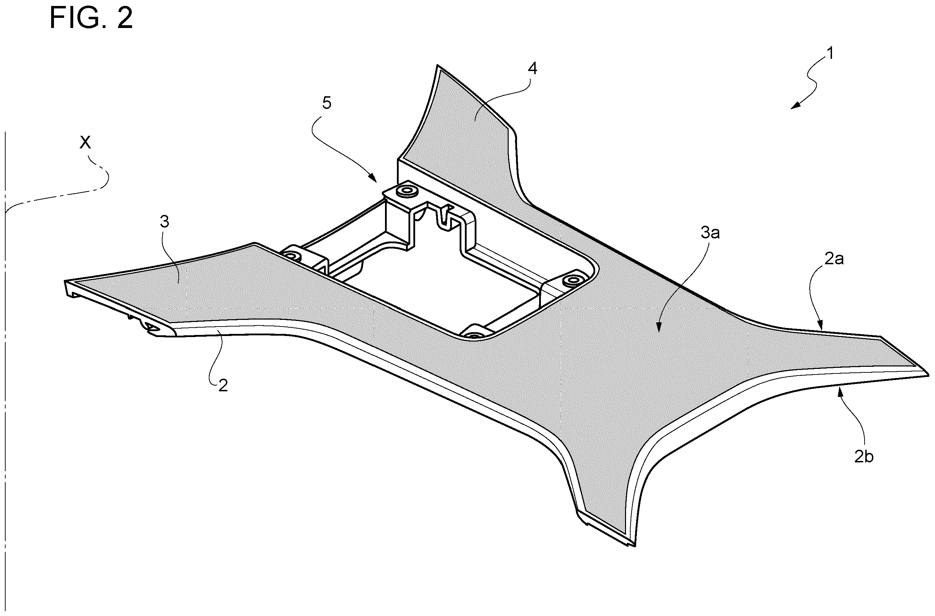

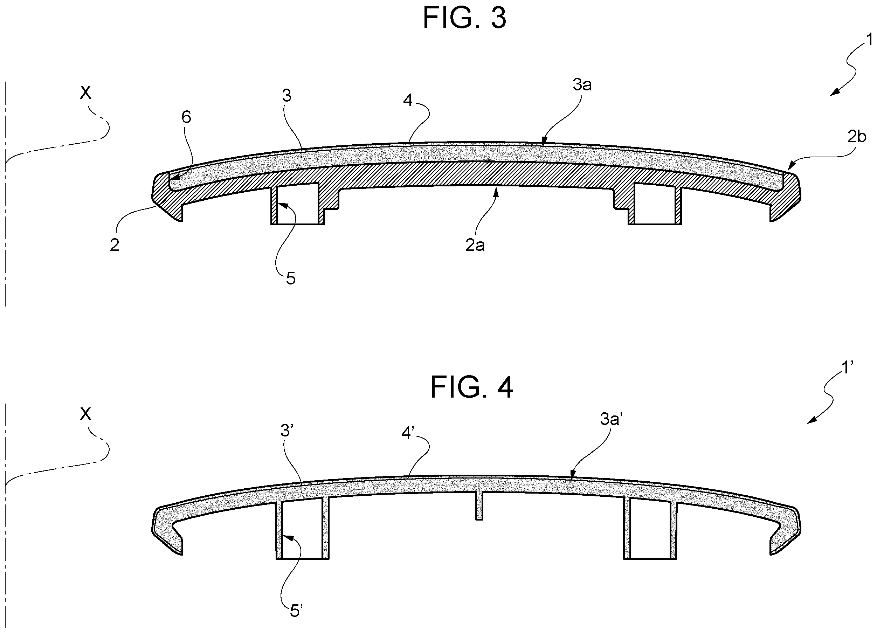

Advantageously, the component 1 comprises (Figures 2 and 3):
- a support layer 2 adapted to be fixed at a portion of the cabin 12;
- a layer 3 made of a sand composition and/or comprising a sand composition and adhering to and/or contiguous to and/or fixed to the support layer 2.

In detail, the support layer 2 and the layer 3 are superimposed on each other along a direction X.

The layer 3 is adapted to be facing the cabin 12 and/or to be visible from the cabin 12. Therefore, the layer 3 defines an aesthetic surface 3a of the component 1.

The support layer 2 comprises, in turn:
- an end face 2a opposite the layer 3 parallel to the direction X;
- an end face 2b opposite the end face 2a parallel to the direction X; and
- a compartment 6 extending at least partly between the end face 2a and the end face 2b parallel to the direction X and adapted to house the layer 3.

In the embodiment illustrated, the end face 2b is aligned or substantially aligned with the aesthetic surface 3a transversely to the direction X and is also adapted to face the cabin 12 and/or be visible from the cabin 12. In detail, the end face 2b and the aesthetic surface 3a define a curved profile in a plane passing through the direction X (figure 3).

The support layer 2 is made of metallic, polymer, ceramic or composite material. Preferably but not necessarily, the support layer 2 is manufactured by additive manufacturing.

The sand composition of the layer 3 comprises sand and a binder. In addition, the sand composition comprises water.

In detail, the sand of the sand composition is a foundry sand. Furthermore, the sand of the sand composition comprises a portion of virgin sand and a portion of recycled sand.

Recycled foundry sand should be understood to mean sand previously used for the manufacture of cores for use in the production of castings by means of casting processes.

More specifically, the sand cores are removed at the end of the casting processes by means of a shake-out process. In detail, the casting appropriately positioned is subjected to vibrations and hammerings so that the sand is crumbled and falls by gravity through appropriate holes, and is then collected in appropriate containers. In this way it is possible, by means of regeneration plants, to recover the spent sand and use it for subsequent applications.

Preferably, the sand of the sand composition has a fineness index between AFA 35 and AFA 120. Even more preferably, the sand of the sand composition has a fineness index between AFA 50 and AFA 55. In detail, a sand with fineness index within the ranges indicated above allows a pleasant tactile sensation to be obtained, especially in comparison with the components inside the cabin.

An example of sand composition is given below:
- virgin sand between 50% and 95% by weight;
- recycled sand between 0% and 45% by weight;
- binder between 2% and 25% by weight;
- water between 0% and 8% by weight.

The sand composition could further comprise a colorant, for example a natural colorant.

The sand of the sand composition could be colored per se, for example Olivina or Cromite.

Preferably but not necessarily, the layer 3 has a thickness between ¼ and ¾ of the thickness of the support layer 2 parallel to the direction X. For example, the support layer 2 has a thickness of between 2 mm and 2.5 mm and the layer 3 has a thickness of between 0.5 mm and 1.5 mm.

The component 1 further comprises a coating layer 4 superimposed on the layer 3. In detail, the coating layer 4 is opposite the support layer 2 with respect to the layer 3. In other words, the coating layer 4 is applied at the aesthetic surface 3a (Figure 3).

In further detail, the coating layer 4 is transparent or opaque and is applied in the form of paint or coating, for example silica-based. In addition, the coating layer 4 could be matte, glossy or have a surface texture. Preferably, the coating layer 4 comprises or is made of bio-based materials.

The support layer 2 further comprises coupling means 5 adapted to allow fixing of the component 1 to the portion of the cabin. For example, the coupling means 5 comprise threaded coupling means or slot-in coupling means.

In the embodiment illustrated, the coupling means 5 are arranged at the end face 5b.

A manufacturing method of the component 1 is described below. Said method comprises the steps of:
i) providing the support layer 2, in particular produced by additive manufacturing;
ii) spreading the sand composition on the support layer 2, so as to form the layer 3 adhering to and/or contiguous to the support layer 2.

In detail, during step ii) the sand composition is arranged at the compartment 6, for example manually.

The method further comprises preferably step iii) of subjecting the layer 3 to a hardening process.

Subsequently to step iii), the method preferably comprises step iv) of finishing the layer 3. In detail, during step iv) the layer 3 is sanded and/or calibrated, for example, in order to eliminate undesired roughness of the aesthetic surface 3a, to correct dimensional or geometric errors of the layer 3.

The method can further comprise step v) of application of the coating layer 4 on the layer 3. In detail, step v) is performed by means of a painting process with glossy, matte or textured finish, or with a spray coating.

With reference to Figure 4 the number 1' indicates a component for a motor vehicle 10 according to a second embodiment of the present invention. The component 1' is similar to the component 1 and will be described below only insofar as it differs from the latter; identical or equivalent parts of the components 1; 1' will be identified, where possible, by the same reference numbers.

The component 1' differs from the component 1 due to the fact that it comprises a layer 3' made of and/or comprising the sand composition and adapted to be fixed at a portion of the cabin 12. More specifically, the layer 3' is adapted to be directly fixed to the portion of the cabin 12. In other words, the component 1' differs from the component 1 due to the fact that it does not comprise the support layer 2.

Analogously to the component 1, the component 1' comprises a coating layer 4' superimposed on the layer 3'. In other words, the coating layer 4' is applied at the aesthetic surface 3a'.

The layer 3' further comprises coupling means 5' adapted to allow fixing of the component 1' to the portion of the cabin. For example, the coupling means 5' comprise threaded coupling means or slot-in coupling means.

In the embodiment illustrated, the coupling means 5' are arranged on the opposite side of the aesthetic surface 3a' along the direction X.

Preferably, the layer 3' is made by forming in a mould having corresponding shape. Alternatively, the layer 3' can be also be made by additive manufacturing; in the latter case, the sand of the sand composition is not of natural origin, but artificial (ceramic) based on zirconium oxide stabilized with cerium, for example of the CERABEADS^{®} type.

From the above, the advantages of the component 1; 1', of the motor vehicle 10, of the manufacturing method and the sand composition according to the invention are evident.

In detail, since the component 1; 1' comprises the layer 3; 3', which is made with the sand composition, the weight of the component 1; 1' is reduced with respect to a component with the same geometry and the same overall dimensions, but made of a solid compact material such as, for example, steel. Said advantage derives from the fact that the sand composition is characterized by a low density.

Since the component 1; 1' comprises the layer 3; 3', which is made of the sand composition, the sound absorption of the components of the motor vehicle 10 is increased, by virtue of the damping capacities of the sand and the roughness of the aesthetic surface 3a; 3a'. The transmission of noise from and towards the cabin 12 is therefore reduced compared to the known motor vehicles.

Since the sand composition comprises a portion of recycled sand, it is possible to reduce the emissions associated with production of the component 1; 1' . Consequently, the sustainability of the motor vehicle 10 overall is further increased. All the more so due to the fact that the support 2 - when present - can be made by additive manufacturing and due to the fact that the coating 4 is a bio-based paint or a silica coating.

Recycled sand is typically reused in the foundry; one of the advantages of the present invention is that of extending the use of the spent regenerated sand also to components for vehicle interiors and exteriors.

Moreover, due to the fact that the support layer 2 and the component 1' can be made using dedicated additive manufacturing machines, the manufacturing process is carried out in one single step and no additional operations are required. Also in this case there is a tangible benefit in terms of sustainability, reducing the need for energy of the plant and without the use of discharge liquids (water).

Due to the fact that the sand composition can comprise a colorant and/or to the fact that the sand is colored per se, the layer 3 can take on specific colors.

Since the component 1; 1' comprises the coating layer 4; 4', it is possible to protect the aesthetic surface 3a; 3a' from mechanical damage, humidity and dirt.

Since the component 1; 1' directly faces the cabin 12 and/or since the layer 3 faces the cabin 12, the sound absorption of the surfaces of the cabin 12 is increased.

Moreover, due to the fact that the layer 3; 3' is made in the sand composition, a particular aesthetic value is associated with the sound absorption function of the aesthetic surface 3a; 3a'.

Lastly, it is clear that modifications and variations that do not depart from the protective scope defined by the claims can be made to the component 1; 1', to the motor vehicle 10, to the manufacturing method and to the sand composition according to the invention.

In particular, the number and shape of the components described and illustrated could be different and in particular varied with great freedom.

The component 1; 1' could be mounted at parts of the cabin 12 different from the tunnel console 13. For example, the component 1; 1' could be applied at the dashboard, the floor, the roof or the doors.

Alternatively or additionally, the component 1; 1' could be mounted at regions of the motor vehicle 10 different from the cabin 12, for example at the trunk.

The component 1; 1' could be mounted at external parts of the motor vehicle 10.

## Claims

1. - Component (1) for a motor vehicle (10), **characterized in that** it comprises:
- a support layer (2) adapted to be fixed to a portion (12) of said motor vehicle (10); and
- a layer (3) made of a sand composition; said layer (3) adhering and/or being contiguous to said support layer (2).

2. - Component (1') for a motor vehicle (10), **characterized in that** it comprises a layer (3') made of a sand composition and adapted to be fixed to a portion (12) of said motor vehicle (10) .

3. - Component according to claim 1 or 2, wherein said sand composition comprises sand, a binder and water.

4. - Component according to claim 3, wherein said sand comprises foundry sand; and/or
wherein said sand composition comprises recycled sand.

5. - Component according to claim 3 or 4, wherein said sand composition comprises:
- virgin sand between 50% and 95% by weight;
- recycled sand between 0% and 45% by weight;
- a binder between 2% and 25% by weight;
- water between 0% and 8% by weight.

6. - Component according to any one of the foregoing claims, wherein said sand composition further comprises a colorant and/or wherein said sand is coloured per se.

7. - Component according to any one of the foregoing claims, further comprising a coating layer (4; 4');
said coating layer (4; 4') being superimposed on said sand composition.

8. - Component according to claim 1 or any one of claims 3 to 7 when depending on claim 1, wherein said support layer (2) comprises coupling means (5) to said portion (12) of said motor vehicle (1).

9. - Component according to claim 1 or any one of claims 3 to 8 when depending on claim 1, wherein said support layer (2) is manufactured by additive manufacturing.

10. - Component according to claim 2 or any one of claims 3 to 9 when depending on claim 2, **characterized in that** it is manufactured by additive manufacturing.

11. - Motor vehicle according to any one of the foregoing claims, comprising:
- a frame (11) defining a cabin (12);
- a plurality of wheels rotatable relative to said frame (11) about respective rotational axes;
**characterized in that** said component (1; 1') is fixed at said cabin (12).

12. - Motor vehicle according to claim 11, **characterized in that** said component (1; 1') directly faces said cabin (12) and/or **in that** said layer (3; 3') of said component (1; 1') is arranged to face said cabin (12).

13. - Manufacturing method of a component (1) for a motor vehicle (10), **characterized in that** it comprises the steps of:
i) providing a support layer (2);
ii) spreading a sand composition on said support layer (2), so as to form a layer (3) adhering and/or contiguous to said support layer (2).

14. - Manufacturing method according to claim 13, **characterized in that** it comprises the further step iii) of subjecting said layer (3) to a hardening process.

15. - Manufacturing method according to claim 13 or 14, **characterized in that** it comprises the step iv) of finishing said layer (3) and/or the step v) of applying a coating layer (4) onto said layer (3).

16. - Manufacturing method according to any one of claims 13 to 15, **characterized in that** it comprises the step vi) of manufacturing said support layer (2) by additive manufacturing.

17. - Manufacturing method according to any one of claims 13 to 16, comprising the step vii) of mixing:
- virgin sand between 50% and 95% by weight;
- recycled sand between 0% and 45% by weight;
- a binder between 2% and 25% by weight;
- water between 0% and 8% by weight;
to obtain said sand composition.

18. - Sand composition comprising:
- virgin sand between 50% and 95% by weight;
- recycled sand between 0% and 45% by weight;
- a binder between 2% and 25% by weight;
- water between 0% and 8% by weight.

19. - Sand composition according to claim 18, further comprising a colorant and/or wherein said virgin sand and/or recycled sand is coloured per se.
